Europäisches Patentamt

European Patent Office

Office européen des brevets

(11) Veröffentlichungsnummer: **0 041 496**

**B1**

(12) **EUROPÄISCHE PATENTSCHRIFT**

(45) Veröffentlichungstag der Patentschrift: **23.03.88**

(21) Anmeldenummer: **81890076.3**

(22) Anmeldetag: **07.05.81**

(51) Int. Cl.⁴: **C 08 G 63/24,  C 08 G 63/18,**
**C 08 J 5/18**

(54) Verfahren zur Herstellung aromatischer Polyester.

(30) Priorität: **07.05.80 AT 2425/80**

(43) Veröffentlichungstag der Anmeldung:
**09.12.81 Patentblatt 81/49**

(45) Bekanntmachung des Hinweises auf die
Patenterteilung:
**23.03.88 Patentblatt 88/12**

(84) Benannte Vertragsstaaten:
**AT BE CH DE FR GB IT LI NL SE**

(56) Entgegenhaltungen:
**DE-A-2 442 541**
**DE-B-1 595 822**
**US-A-3 216 970**
**US-A-3 546 165**

**KUNSTSTOFF-HANDBUCH, Band VIII, 1973, C.**
**HANSER VERLAG, München, Seiten 182 bis**
**184**

(73) Patentinhaber: **ISOVOLTA Österreichische**
**Isolierstoffwerke Aktiengesellschaft**
**Industriezentrum-Süd**
**A-2351 Wiener Neudorf (AT)**

(72) Erfinder: **Rieder, Werner, Dr.**
**Schrutkagasse 70**
**A-1130 Wien (AT)**
Erfinder: **Fehrle, Martin, Dr.**
**Hauptstrasse 26B s/3**
**A-2351 Wiener Neudorf (AT)**

(74) Vertreter: **Stampfer, Heinz**
**ISOVOLTA Österreichische Isolierstoffwerke AG**
**Industriezentrum-Süd**
**A-2351 Wiener Neudorf (AT)**

**Die Akte enthält technische Angaben, die nach**
**dem Eingang der Anmeldung eingereicht**
**wurden und die nicht in dieser Patentschrift**
**enthalten sind.**

EP 0 041 496 B1

# 0 041 496

## Beschreibung

Die Erfindung betrifft ein Verfahren zur Herstellung aromatischer Polyester durch Polykondensation von Diphenolen mit Chloriden aromatischer Dicarbonsäuren wie Isophthalsäure und/oder Terephthalsäure nach dem Zweiphasengrenzflächen-Polykondensationsverfahren, wobei aus der wässrigen Phase, bestehend aus einer Lösung aus dem Diphenol, Alkalihydroxid zur Bildung des Diphenolates im stöchiometrischen Verhältnis oder in geringem Überschuß, sowie einem Phasentransferkatalysator, wie Benzyl-triäthylammoniumchlorid, Tetrabutylammoniumjodid oder Kronenäther in einem Gemisch aus Wasser und einem organischen Lösungsmittel als Lösungsvermittler mit der organisch-flüssigen Phase bestehend aus einer Lösung des Säurechlorids in einem chlorierten Lösungsmittel eine feine Dispersion hergestellt wird, wobei das mit Hilfe des Phasentransferkatalysators in die organisch flüssige Phase übergeführte Diphenolat mit dem Säurechlorid zur Bildung des Polyesters eine Polykondensationsreaktion eingeht und der gebildete Polyester in der organischen Phase gelöst bleibt.

Das erfindungsgemäße Verfahren dient vorzugsweise zur Herstellung von Polyestern bzw. Copolyestern aus

1,1-Bis(4-hydroxyphenyl)-1-phenyläthan oder
9,9-Bis(4-hydroxyphenyl)-fluoren
als Diphenole und iso/tere Phthalsäure
als Säurekomponenten.

Ein Polykondensationsverfahren der eingangs genannten Art sowie Polyester der vorgenannten Zusammensetzung sind aus den US—A—3 216 970 bzw. 3 546 165 bekannt.

Bei dem aus der US—A—3 216 970 bekannten Zweiphasengrenzflächen-Polykondensationsverfahren wird in der wässrigen Phase z.B. Dioxan als Lösungsvermittler eingesetzt. An sich sind zwar die in Frage kommenden Diphenolate meist in Wasser löslich. Die Löslichkeit einiger dieser Diphenolate in Wasser allein, insbesondere solcher, die ein zentrales Kohlenstoffatom aufweisen, derart, daß an dieses Kohlenstoffatom gebundene Gruppen in ihrer freien Drehung gehindert sind, ist bei niedrigen Temperaturen, z.B. bei Zimmertemperatur, bei der die Zweiphasengrenzflächen-Polykondensation vorteilhafterweise durchgeführt wird, sehr niedrig, sodaß in diesem Falle mit sehr niedrigen Diphenolat-Konzentrationen gearbeitet werden müßte. Manche Diphenolate sind bei Zimmertemperatur überhaupt im Wasser sehr schwer löslich.

Die zur Erhöhung der Löslichkeit der Diphenolate in der wässrigen Phase eingesetzten Lösungsvermittler, wie Dioxan oder Tetrahydrofuran sind cyclische Äther, die unter den gegebenen Reaktionsbedingungen inert sind. Sie sind jedoch relativ teuer und schaffen wegen ihrer hohen Giftigkeit besonders bei einem Einsatz im großtechnischen Maßstab nicht unwesentliche Probleme.

Die in den US—A—3 216 970 bzw. 3 546 165 beschriebenen Polyester auf Basis von 1,1 - Bis(4 - hydroxyphenyl) - 1 - phenyläthan oder 9,9 - Bis(4 - hydroxyphenyl)fluoren weisen aber relativ geringe Molekulargewichte auf und zwar lagen die die Molekulargewichte kennzeichnenden Werte der inherenten Viskosität (IV$=\eta_{inh}$, gemessen bei 30°C an einer Lösung von 0,5 g Polyester in 100 ml Lösungsmittel bestehend aus 60 Gew.% Phenol und 40 Gew.% 1,1,2,2-Tetrachloräthan) meist im Bereich von 0,8 bis 1,0 dl/g und nur ausnahmsweise etwas höher (siehe Beispiel XXVII in der US—A—3 546 165).

Mit solchen Polyestern können, wie die Anmelderin gefunden hat, aber z.B. keine gegossenen Filme hergestellt werden, die insbesondere hinsichtlich ihrer mechanischen Eigenschaften den üblichen Anforderungen der Praxis genügen, was mit ein Grund sein mag, daß Polyester dieser Art bis jetzt noch nicht verwendet werden.

Den vorstehend genannten Nachteilen wird nun durch die Erfindung abgeholfen. Dabei löst das erfindungsgemäße Polykondensationsverfahren, wie es in den Ansprüchen 1 bis 6 gekennzeichnet ist, die Aufgabe, den Einsatz von teuren und/oder giftigen Lösungsvermittlern zu vermeiden.

Im Rahmen der erfinderischen Tätigkeit wurde gefunden, daß es nicht notwendig ist, Lösungsvermittler einzusetzen, die unter den gegebenen Reaktionsbedingungen, z.B. gegenüber den in der organischen Phase eingesetzten Säurechloriden, völlig inert sind. Als notwendige Bedingung für diese Lösungsvermittler genügt es nämlich, wenn die Reaktivität dieser Lösungsvermittler gegenüber der Reaktivität der mit den Säurechloriden zur Polykondensation gelangenden Diphenolate sehr gering ist. Dies ist aber bei den erfindungsgemäß einzusetzenden Lösungsvermittlern der Fall.

Die durch das erfindungsgemäße Polykondensationsverfahren erzielten Vorteile bestehen u.a. darin, daß das Verfahren durch die erfindungsgemäß eingesetzten $C_1$ bis $C_5$ aliphatischen Alkohole als Lösungsvermittler billiger und unproblematischer zu handhaben ist als beim Einsatz von Dioxan oder dgl., wobei die in reproduzierbarer Weise erzielten Molekulargewichte der durch das erfindungsgemäße Verfahren hergestellten Polyester höher liegen als bis jetzt bekannt war.

Der Vorteil der nach dem erfindungsgemäßen Verfahren hergestellten hochmolekularen Polyester bzw. der aus diesen Polyestern hergestellten Folien besteht u.a. darin, daß die aus ihnen hergestellten Folien solche mechanischen Eigenschaften haben, daß sie in der Praxis einsetzbar sind und daß bei diesen Polyestern die produktionsbedingten Schwankungen in der Höhe des erzielten Molekulargewichts nur geringe Auswirkungen auf die Qualität der aus diesen Polyestern hergestellten Produkte bzw. Folien haben.

Diese Eigenschaften ergeben sich aus folgendem:

Wie die Anmelderin gefunden hat, bestehen bei dem Polyester auf Basis von 1,1 - Bis(4 -

2

hydroxyphenyl) - 1 - phenyläthan, nachstehend als PE-I bezeichnet, und dem auf Basis von 9,9 - Bis(4 - hydroxyphenyl) - fluoren, nachstehend als ·PE-II bezeichnet, ähnliche Abhängigkeiten zwischen der erreichten inherenten Viskosität (IV-Wert) des Polyesters und der Reißdehnung der aus dem betreffenden Polyester hergestellten Folie. Bei beiden Polyestern PE-I und PE-II beginnt die Filmbildung bei IV-Werten von etwa 0,4 dl/g. Die Reißdehnung $\varepsilon_1$ der Folien aus PE-I steigt zwar mit zunehmenden IV-Werten wesentlich stärker an und erreicht auch bei besonders hohen IV-Werten einen höheren Maximalwert als dies bei der Reißdehnung $\varepsilon_2$ der Folien aus PE-II der Fall ist, doch sind die relativen Zunahmen der Reißdehnung in denselben IV-Werte-Bereichen für beide Polyester PE-I und PE-II im wesentlichen gleich. Für beide Polyester steigt nämlich im IV-Wert-Bereich von 1,0—1,5 dl/g, die Reißdehnung um etwa 20%, jedoch im Bereich von 1,5—2,0 dl/g nur mehr um etwa 5% an.

Beim Polymerisationsprozeß hängt nun der erzielte IV-Wert sehr stark von der Reinheit der eingesetzten Monomeren und Hilfsstoffe ab, d.h. bereits relativ geringe Reinheitsabweichungen wirken sich in relativ großen Abweichungen in den IV-Werten aus. Unter normalen Produktionsbedingungen werden Schwankungen der IV-Werte von ±10% vom gewünschten Mittelwert wahrscheinlich nur schwer zu vermeiden sein. Dies hat zur Folge, daß sich die Reißdehnung von insbesondere durch ein Gießverfahren hergestellten Folien, die aus PE-I oder PE-II mit IV-Werten zwischen 1,5 bis 2,5 dl/g, vorzugsweise zwischen 1,8 bis 2,4 dl/g hergestellt sind, in Abhängigkeit von den IV-Werten nur relativ wenig ändert.

Polyester vom Typ PE-I oder PE-II mit IV-Werten von mehr als 2,5 dl/g haben nun als Nachteil, daß mit steigenden IV-Werten einerseits die Anforderungen an die Reinheit der Ausgangsmaterialien für die Praxis im zunehmendem Maße unzumutbar hoch werden und, andererseits, die Polyesterkonzentration in der zum Filmgießen verwendeten Lösung—bei vorgegebener optimaler Viskosität der Gießlösung—in zunehmendem Maße auf Werte absinkt, bei denen ein Foliengießen schwierig oder unmöglich wird. Außerdem wird bei Folien aus Polyestern mit IV-Werten im Bereich größer als 2,5 dl/g mit zunehmenden IV-Werten keine wesentliche Steigerung der Reißdehnung mehr erzielt.

Die Anmelderin hat ferner gefunden, daß der nach der Norm ASTM D 2863-77 gemessene Sauerstoffindex bei den erfindungsgemäßen Folien in vorteilhafter Weise höher liegt als bei Folien aus einem Polyester derselben Art mit niedrigerem Molekulargewicht. Ein möglichst hoher Sauerstoffindex von Kunststoffen wird nämlich in zunehmendem Maße speziell in solchen Anwendungen verlangt, bei denen bei einer thermischen Zersetzung des eingesetzten Kunststoffs, wie sie bei einem Defekt oder Unfall, insbesondere aber auch im Falle eines Brandes eintreten. kann, die Rauchentwicklung sowie die Giftigkeit der entstehenden Zersetzungsprodukte möglichst gering sein sollen.

Das erfindungsgemäße Polykondensationsverfahren wird nachstehend in einem Ausführungsweg im Zusammenhang mit der Herstellung der Polyester PE-I und PE-II unter Einsatz verschiedener Lösungsvermittler anhand der Beispiele 1 bis 4 näher erläutert. Die Herstellung der Diphenole mit relativ hochliegenden Schmelzbereichen, wie sie gemäß den nachfolgenden Beispielen verwendet werden, ist in der mit demselben Anmeldedatum eingereichte Europäische Anmeldung 81890075.5 (EP—A—0065060) der Anmelderin beschrieben.

Beispiel 1: Herstellung von PE-I

a) Herstellung der Diphenolat-Lösung:

264 g Natriumhydroxid werden in 4 l destilliertem Wasser gelöst und mit 2,0 l Isopropanol (techn. destilliert) versetzt. In dieser Mischung werden unter Erwärmen auf 70°C 871 g (3,0 Mol) 1,1 - Bis(4 - hydroxyphenyl) - 1 - phenyläthan mit einem Schmelzbereich von 189—191°C, gemessen an einem Mikroheiztisch nach Kofler, gelöst. Nach Abkühlung auf Raumtemperatur versetzt man die klare Lösung des Diphenolats mit 8 Liter destilliertem Wasser.

b) Herstellung der Säurechlorid-Lösung:

304.5 g (1,5 Mol) iso-Phthaloylchlorid und 304,5 g (1,5 Mol)tere-Phthaloylchlorid werden in 2,0 l 1,2-Dichloräthan, das über Calciumhydrid getrocknet und destilliert wurde, bei Raumtemperatur gelöst und unter Ausschluß von Feuchtigkeit aufbewahrt.

c) Herstellung der Katalysatorlösung:

34,5 g (0,15 Mol) Benzyl-triäthylammoniumchlorid werden bei Raumtemperatur in 200 ml destilliertem Wasser gelöst.

d) Polymersynthese:

In einem kühlbaren, mit einem hochtourigen Rührer, Thermometer und Dosierpumpe versehenen Reaktionsgefäß wird die Diphenolat-Lösung vorgelegt, mit 15 l destilliertem 1,2-Dichloräthan und der Katalysatorlösung versetzt und das Gemisch durch intensives Rühren dispergiert. Dieser Dispersion wird dann—unter weiterem intensiven Rühren—während 25 min mittels der Dosierpumpe die Säurechlorid-Lösung zudosiert, wobei die Temperatur der Dispersion, gegebenenfalls durch Kühlung, unter 40°C gehalten wird. Danach wird noch 45 min weitergerührt, wobei der die Viskosität der Dispersion ansteigt. Damit ist die Polykondensationsreaktion beendet und der gebildete Polyester in der organisch-flüssigen Phase der Dispersion gelöst.

**0 041 496**

e) Aufarbeitung:

Nach Überführung der Dispersion in einen geeigneten Behälter trennen sich die wässrige und die organische Phase innerhalb von 15 Minuten. Die wässrige, noch stark alkalische Phase wird verworfen, die organische hochviskose Phase 3 mal mit je 30 l Wasser gewaschen und zur Ausfällung des Polymers mit 30 l techn. Isopropanol unter starkem Rühren portionsweise versetzt, wobei der Polyester einen feinkörnigen Niederschlag bildet. Zur Entfernung von restlichem 1,2-Dichloräthan wird der Polyester mit weiteren 30 l Isopropanol behandelt, abzentrifugiert und in der Zentrifuge 2 mal mit je 10 l Wasser chloridfrei gewaschen. Die Trocknung des erhaltenen ISO-CPE erfolgt im Umlufttrockenschrank unter Frischluftzufuhr bei 130°C zur Gewichtskonstanz innerhalb von 15 Stunden.

Ausbeute: 1197 g (95% der Theorie)
Inherente Viskosität: 2,0 dl/g.

Beispiel 2: Herstellung von PE-I
a) Herstellung der Diphenolat-Lösung:

Dieser Verfahrensschritt erfolgt analog wie der gemäß Beispiel 1, mit der Ausnahme, daß hier statt Isopropanol 2,0 l Äthanol (techn.destilliert) als Lösungsvermittler eingesetzt werden.

Die Verfahrensschritte b—d erfolgen danach wie gemäß Beispiel 1.

Ausbeute: 1210 g (96% der Theorie)
Inherente Viskosität: 1,65 dl/g.

Beispiel 3: Herstellung von PE-I
a) Herstellung der Diphenolat-Lösung:

16,16 g Natriumhydroxid werden in 0,5 l destilliertem Wasser gelöst und mit 0,1 l Äthylenglycol (Merck, pro analysi) versetzt. In dieser Mischung werden unter Erwärmen auf 70°C 58 g (0,2 Mol) 1,1 - Bis(4 - hydroxyphenyl) - 1 - phenyläthan mit einem Schmelzbereich von 189—191°C, gemessen wie in Beispiel 1, gelöst. Bei Abkühlung auf Raumtemperatur geliert die Mischung, bleibt jedoch rührbar.

b) Herstellung der Säurechlorid-Lösung:

20,3 g (0,1 Mol) iso-Phthaloylchlorid und 20,3 g (0,1 Mol)tere-Phthaloylchlorid werden in 0,1 l 1,2-Dichloräthan, das über Calciumhydrid getrocknet und destilliert wurde, bei Raumtemperatur gelöst und unter Feuchtigkeitsausschluß aufbewahrt.

c) Herstellung der Katalysator-Lösung:

2,3 g (0,01 Mol) Benzyl-triäthylammoniumchlorid werden bei Raumtemperatur in 50 ml destilliertem Wasser gelöst.

d) Polymersynthese:

In einem 2 l-Reaktionsgefäß wird mittels eines Intensivrühres aus der Diphenolat-Lösung 0,4 l 1,2-Dichloräthan und der Katalysator-Lösung eine feine Dispersion hergestellt und diese mit der Säurechlorid-Lösung. versetzt. Anschließend rührt man noch 20 Minuten, wobei die Temperatur auf 40°C ansteigt und die Viskosität der Dispersion stark zunimmt.

e) Aufarbeitung:

Nach Abtrennung der wässrigen Phase wird die organische Phase 3 mal mit je 0,5 l Wasser gewaschen, mit 0,5 l 1,2-Dichloräthan verdünnt und zur Ausfällung des Polymers unter starkem Rühren portionsweise mit insgesamt 5,0 l Isopropanol versetzt. Dabei bildet der Polyester einen feinkörnigen Niederschlag, der abfiltriert und mit 1 l Isopropanol und 4 mal mit je 1 l Wasser gewaschen wird. Die Trocknung erfolgt bei 130°C zur Gewichtskonstanz innerhalb von 15 Stunden.

Ausbeute: 72 g (86% der Theorie)
Inherente Viskosität: 1,53 dl/g.

Beispiel 4: Herstellung von PE-II
a) Herstellung der Diphenolat-Lösung:

264 g Natriumhydroxid werden in 5,0 l destilliertem Wasser gelöst und mit 2,5 l Isopropanol (techn. destilliert) versetzt. In dieser Mischung werden unter Erwärmen auf 70°C 1051 g (3,0 Mol) 9,9 - Bis(4 - hydroxyphenyl)fluoren mit einem Schmelzbereich von 228—230°C, gemessen wie bei Beispiel 1, gelöst und danach abgekühlt. Bei Raumtemperatur gibt man noch 1,0 l destilliertes Wasser zu.

Die Verfahrensschritte b—d erfolgen danach wie gemäß Beispiel 1.

Ausbeute: 1383 g (96% der Theorie)
Inherente Viskosität: 1,73 dl/g.

Die einzelnen Schritte zur Herstellung von Gießfolien aus den erfindungsgemäßen Polyestern können bekanntermaßen auf einer dazu geeigneten Foliengießmaschine realisiert werden. Die dabei hergestellten Folien werden nachstehend an.einem weiteren Beispiel 5 näher erläutert.

4

Beispiel 5: Folie aus PE-I

Zur Herstellung einer Folie wird als Gießlösung eine 7,5 Gew.%ige Lösung des gemäß Beispiel 1 synthetisierten Polyesters in 1,2-Dichloräthan hergestellt und aus ihr mittels einer Foliengießmaschine eine Folie von 0,025 mm Dicke hergestellt. Die nach der Norm ASTM D 882-75b bestimmte Reißdehnung dieser Folie betrug 61%.

Der Sauerstoffindex einer durch Handgießen aus derselben Gießlösung hergestellten Folie von 0,125 mm Dicke, bestimmt nach der Norm ASTM D 2863—77, betrug 27%.

## Patentansprüche

1. Verfahren zur Herstellung aromatischer Polyester durch Polykondensation von Diphenolen mit Chloriden aromatischer Dicarbonsäuren wie Isophthalsäure und/oder Terephthalsäure nach dem Zweiphasengrenzflächen-Polykondensationsverfahren, wobei aus der wässrigen Phase, bestehend aus einer Lösung aus dem Diphenol, Alkalihydroxid zur Bildung des Diphenolates in stöchiometrischem Verhältnis oder in geringem Überschuß, sowie einem Phasentransferkatalysator, wie Benzyl-triäthylammoniumchlorid, Tetrabutylammoniumjodid oder Kronenäther, in einem Gemisch aus Wasser und einem organischen Lösungsmittel als Lösungsvermittler, mit der organischflüssigen Phase, bestehend aus einer Lösung des Säurechlorids in einem chlorierten Lösungsmittel, eine feine Dispersion hergestellt wird, wobei das mit Hilfe des Phasentransferkatalysators in die organisch-flüssige Phase übergeführte Diphenolat mit dem Säurechlorid zur Bildung des Polyesters eine Polykondensationsreaktion eingeht und der gebildete Polyester in der organischen Phase gelöst bleibt, dadurch gekennzeichnet, daß als Lösungsvermittler ein ein- oder zweiwertiger aliphatischer Alkohol mit 1 bis 5 Kohlenstoffatomen, bei dem gegebenenfalls eine Methylengruppe durch Sauerstoff ersetzt ist, oder ein Gemisch aus solchen Alkoholen eingesetzt wird.

2. Verfahren nach Anspruch 1, dadurch gekennzeichnet, daß der als Lösungsvermittler eingesetzte zweiwertige aliphatische Alkohol, bei dem gegebenenfalls eine Methylengruppe durch Sauerstoff ersetzt ist, einer mit 3 bis 5 Kohlenstoffatomen ist.

3. Verfahren nach Anspruch 1, dadurch gekennzeichnet, daß der als Lösungsvermittler eingesetzte aliphatische Alkohol, bei dem gegebenenfalls eine Methylengruppe durch Sauerstoff ersetzt ist, ein einwertiger Alkohol ist.

4. Verfahren nach Anspruch 3, dadurch gekennzeichnet, daß der als Lösungsvermittler eingesetzte einwertige aliphatische Alkohol einer mit 2 bis 5 Kohlenstoffatomen ist.

5. Verfahren nach einem der Ansprüche 1 bis 4, dadurch gekennzeichnet, daß als Diphenol 1,1 - Bis(4 - hydroxyphenyl) - 1 - phenyläthan eingesetzt wird.

6. Verfahren nach einem der Ansprüche 1 bis 4, dadurch gekennzeichnet, daß als Diphenol 9,9 - Bis(4 - hydroxyphenyl) - fluoren eingesetzt wird.

## Revendications

1. Procédé de préparation de polyesters aromatiques par polycondensation de diphénol avec des chlorures de diacides aromatiques comme, par exemple, l'acide isophtalique et/ou l'acide téréphtalique selon le procédé de polycondensation diphasique interfacial, dans lequel, on prépare une dispersion fine à partir de la phase aqueuse, constituée d'une solution de diphénol, d'hydroxyde alcalin employé en un rapport stoéchiométrique ou en un léger excès pour la formation du diphénolate ainsi que d'un catalyseur de transfert de phase tel que, par exemple, le chlorure de benzyltriéthylammonium, l'iodure de tétrabutylammonium ou un éther couronne, dans de l'eau et un solvant organique agissant en tant qu'agent de dissolution, et de la phase organique liquide, constituée d'une solution du chlorure d'acide dans un solvant chloré, dans lequel le diphénolate passé dans la phase organique liquide avec l'aide du catalyseur de transfert de phase entre dans une réaction de polycondensation avec le chlorure d'acide pour la formation du polyester et le polyester formé reste dissous dans la phase organique, caractérisé en ce que l'on utilise comme agent de dissolution un alcool aliphatique mono- ou di-fonctionnel renfermant de 1 à 5 atomes de carbone dans lequel, le cas échéant, un groupe méthylène est remplacé par un atome d'oxygène ou un mélange de tels alcools.

2. Procédé selon la revendication 1, caractérisé en ce que l'alcool aliphatique, dans lequel un groupe méthylène est éventuellement remplacé par un atome d'oxygène, employé comme agent de dissolution divalent est un alcool renfermant de 3 à 5 atomes de carbone.

3. Procédé selon la revendication 1, caractérisé en ce que l'alcool aliphatique, dans lequel un groupe méthylène est éventuellement remplacé par un atome d'oxygène, employé comme agent de dissolution est un alcool monofonctionnel.

4. Procédé selon la revendication 3, caractérisé en ce que l'alcool aliphatique monovalent employé comme agent de dissolution est un alcool renfermant de 2 à 5 atomes de carbone.

5. Procédé selon l'une quelconque des revendications 1 à 4, caractérisé en ce que le diphénol employé est le 1,1 - bis(4 - hydroxyphényl) - 1 - phényléthane.

6. Procédé selon l'une quelconque des revendications 1 à 4, caractérisé en ce que le diphénol employé est un 9,9 - bis(4 - hydroxyphényl)-fluorure.

**Claims**

1. Process for the preparation of aromatic polyesters by polycondensation of diphenols with chlorides of aromatic dicarboxylic acids such as isophthalic acid and/or terephthalic acid according to the two-phase interface polycondensation method, whereby a fine dispersion is produced from the aqueous phase, consisting of a solution of the diphenol, alkali hydroxide for the formation of the diphenolate in a stoichiometric ratio or in a slight excess, and also a phase transfer catalyst, such as benzyltriethylammonium chloride, tetrabutyl ammonium iodide or crown ether, in a mixture of water and an organic solvent as solubilizer, with the organic liquid phase, consisting of a solution of the acid chloride in a chlorinated solvent, whereby the diphenolate, transferred into the organic liquid phase by means of the phase transfer catalyst, undergoes a polycondensation reaction with the acid chloride for the formation of the polyester, and the polyester which is formed remains dissolved in the organic phase, characterized in that as solubilizer a monohydric or dihydric aliphatic alcohol with 1 to 5 carbon atoms is used, in which if necessary a methylene group is substituted by oxygen, or a mixture of such alcohols is used.

2. Process according to Claim 1, characterized in that the dihydric aliphatic alcohol which is used as solubilizer, in which if necessary a methylene group is substituted by oxygen, is one with 3 to 4 carbon atoms.

3. Process according to Claim 1, characterized in that the aliphatic alcohol which is used as solubilizer, in which if necessary a methylene group is substituted by oxygen, is a monohydric alcohol.

4. Process according to Claim 3, characterized in that the monohydric aliphatic alcohol which is used as solubilizer is one with 2 to 5 carbon atoms.

5. Process according to one of Claims 1 to 4, characterized in that 1,1 - bis(4 - hydroxyphenyl) - 1 - phenyl ethane is used as diphenol.

6. Process according to one of Claims 1 to 4, characterized in that 9,9 - bis(4 - hydroxyphenyl) - fluorene is used as diphenol.